# EUROPÄISCHE PATENTSCHRIFT

(11) **EP 3 737 844 B1**
(45) Veröffentlichungstag und Bekanntmachung des Hinweises auf die Patenterteilung: **13.10.2021**
(21) Anmeldenummer: 18700171.4
(22) Anmeldetag: 11.01.2018
(51) Int. Cl.: F01N 3/22, F01N 3/30

(54) **LUFTZUFUHRREGELSYSTEM FÜR EINE VERBRENNUNGSKRAFTMASCHINE**
AIR SUPPLY CONTROL SYSTEM FOR AN INTERNAL COMBUSTION ENGINE
SYSTÈME DE RÉGULATION D'ALIMENTATION EN AIR D'UN MOTEUR À COMBUSTION INTERNE

(43) Veröffentlichungstag der Anmeldung: 18.11.2020
(73) Patentinhaber: Pierburg GmbH, 41460 Neuss (DE)
(72) Erfinder: BOUTROS-MIKHAIL, Matthias, 41460 Neuss (DE); GOTTER, Alexander, 40595 Düsseldorf (DE); RÖSGEN, Thomas, 41516 Grevenbroich (DE); CELIK, Halim, 50354 Hürth (DE); WEHNEMANN, Andreas, 41462 Neuss (DE)
(74) Vertreter: terpatent Patentanwälte ter Smitten Eberlein-Van Hoof Rütten Daubert
(86) Internationale Anmeldenummer: PCT/EP2018/050674
(87) Internationale Veröffentlichungsnummer: WO 2019/137611

(56) Entgegenhaltungen:
- EP-A2- 2 014 887
- GB-A- 1 206 261
- JP-A- H02 196 121

## Beschreibung

Die Erfindung betrifft eine Luftventiivorrichtung für eine Verbrennungskraftmaschine mit einem mehrteiligen Gehäuse, das zumindest ein Antriebsgehäuse und ein Strömungsgehäuse aufweist, wobei im Antriebsgehäuse eine Antriebseinheit angeordnet ist, die auf eine Ventilstange einwirkt, wobei das Strömungsgehäuse einen Fluideinlass und einen Fluidauslass aufweist, wobei im Strömungsgehäuse eine Ventilverschlusseinheit vorgesehen ist, die einen Ventilverschlusskörper und ein Abdichtorgan aufweist, die mit genau einer Ventilsitzfläche derart zusammenwirken, dass der Fluideinlass fluidisch von dem Fluidauslass trennbar bzw. mit diesem verbindbar ist, wobei zumindest der Ventilverschlusskörper durch die Ventilstange betätigbar ist und das Abdichtorgan unabhängig vom Ventilverschlusskörper betätigbar ist.

Derartige LuftventIlvorrichtungen werden in Luftzufuhrregelsystemen beispielsweise bei der Sekundärlufteinblasung in den Abgastrakt eines Verbrennungsmotors zur Schadstoffreduzierung während der Kaltstartphase genutzt, wobei über die Luftventilvorrichtung der von einem Sekundärluftgebläse zur Verfügung gestellte Sekundärluftstrom freigegeben oder abgesperrt werden kann. Ein Rückschlagventil verhindert ein Rückströmen von Abgas aus dem Abgasbereich zur Sekundärluftpumpe bei auftretenden Abgaspulsationen. Während der Kaltstartphase wird Sekundärluft dem fetten Gemisch, welches beim Kaltstart erforderlich ist, im Abgasstrang vor dem Katalysator zugeführt, wodurch eine Nachverbrennung stattfindet, welche neben der Reduzierung von Kohlenmonoxid und unverbrannten Kohlenwasserstoffen auch zu einer schnelleren Aufheizung des Katalysators durch die entstehende Wärme führt.

Durch Gesetzesänderungen wird es zusätzlich notwendig, die Partikelemissionen eines Ottomotors zu reduzieren. Hierzu werden Otto-Partikelfilter eingesetzt, welche jedoch regelmäßig regeneriert werden müssen. Hierzu sind verschiedene Verfahren bekannt. Eine dieser Möglichkeiten ist die Sauerstoffkonzentration im Abgas auf über 7 % zu erhöhen, wodurch eine Nachverbrennung stattfinden kann. Hierzu ist es erforderlich, dem Abgas frischen Sauerstoff zuzuführen. Dies erfolgt ebenfalls über zusätzliche Gebläse, welche über eine Luftventilvorrichtung mit dem Abgasstrang verbunden werden.

Da die Sekundärluftgebläse lediglich beim Kaltstart genutzt werden, können diese Gebläse auch für die Otto-Partikelfilter-Regeneration verwendet werden, wenn eine ausreichende maximale Laufzeit der Gebläse sichergestellt wird, welche bei der Sekundärlufteinblasung lediglich etwa 30 Sekunden beträgt, während das Gebläse zur Regeneration der Partikelfilter auch beispielsweise etwa 5 Minuten funktionsfähig sein muss.

Für beide Anwendungen ist es erforderlich, Luftventllvorrichtungen vorzusehen, die einerseits im geschlossenen Zustand eine hohe Dichtigkeit aufweisen und andererseits ein Strömen des Abgases in Richtung des Gebläses zuverlässig verhindern. Insbesondere, wenn das Gebläse sowohl zur Otto-Partikelfilter-Regeneration als auch zur Sekundärlufteinblasung genutzt werden soll, ist es erforderlich, dass das den jeweils nicht genutzten Strang verschließende Ventil dicht ist, so dass nicht ungewollt Luft an einer falschen Position dem Abgasstrang zugeführt wird.

Es sind verschiedene zu diesem Zweck der Luftzufuhrregelung nutzbare abschaltbare Luftventilvorrichtungen bekannt geworden, welche entweder pneumatisch, elektromagnetisch oder elektrisch aktuiert werden. Insbesondere die pneumatisch betätigten Ventile sind dabei ohne größeren zusätzlichen Energieaufwand zu nutzen, da im Verbrennungsmotor sowohl Überdruck als auch Unterdruck zur Verfügung steht. In diesem Zusammenhang können beispielsweise Luftventilvorrichtungen gemäß den Druckschriften JP H 02 196121 A und GB 1 206 261 A genannt werden. Hierbei sind jedoch zwei Ventilverschlusskörper vorgesehen, die jeweils mit unterschiedlichen Ventilsitzen zusammenwirken.

Ein solches Ventils ist aus der DE 102 02 031 A1 oder auch aus der EP 2 014 887 A2 bekannt. Hierbei ist es möglich, die Ventile über den vom Gebläse selbst erzeugten Druck zu betätigen, wobei die entsprechende Zuführung des Drucks in die jeweilige Betätigungskammer beispielsweise über ein elektrisch geschaltetes Umschaltventil erfolgt.

Unabhängig von der Aktuierung ist hieraus insbesondere eine Ventilverschlusseinheit bekannt, die einen von einem Aktuator zu betätigenden Ventilverschlusskörper und ein vom Luftdruck zu betätigendes Abdichtorgan aufweist, die mit genau einer Ventilsitzfläche derart zusammenwirken, dass der Fluideinlass fluidisch von dem Fluidauslass trennbar bzw. mit diesem verbindbar ist.

Problematisch ist hierbei, dass aufgrund der Ausgestaltung der Ventilverschlusseinheit ein hoher Differenzdruck zwangsläufig zu einem hohen Luftdurchsatz führt, wobei insbesondere bei der Partikelfilterregeneration in manchen Betriebssituationen auch bei einem hohen Differenzdruck ein geringer Luftdurchsatz gefordert ist.

Es stellt sich daher die Aufgabe, eine Luftventilvorrichtung zu schaffen, die den obengenannten Nachteil auf einfache und kostengünstige Weise vermeidet.

Diese Aufgabe wird durch ein Luftzufuhrregelsystem für eine Verbrennungskraftmaschine mit den Merkmalen des Hauptanspruchs 1 gelöst.

Dadurch, dass Öffnungsmittel für die Ventilverschlusseinheit vorgesehen sind, die eine definierte Öffnung des Abdichtorgans unabhängig von einem Differenzdruck zwischen Fluideinlass und Fluidauslass ermöglichen, wobei das Abdichtorgan als Öffnungsmittel eine Blendenöffnung aufweist. Die eine Förderung einer geringen Menge Luft vom Fluideinlass zum Fluidauslass ermöglicht, ist es möglich, zumindest bis zu einem gewissen Differenzdruck lediglich einen sehr geringen Luftdurchsatz zu realisieren. Hierdurch ist es möglich selbst im leerlaufnahen Betriebsbereich Kleinstmengen an Luftdurchsatz zu realisieren.

Hierbei kann in vorteilhafter Weise die Blendenöffnung einen Durchströmdurchmesser von 0,5 mm bis 3 mm aufweisen. Durch eine derartige Blendenöffnung wird selbst bei einem sehr hohen Differenzdruck zwischen Fluideinlass und -auslass lediglich ein geringer Luftdurchsatz realisiert.

Zusätzlich können als Öffnungsmittel Betätigungsmittel zur Betätigung des Abdichtorgans vorgesehen sein, derart, dass das Abdichtorgan definiert zu öffnen ist, wenn der Ventilverschlusskörper geöffnet ist, Hierbei kann die Ventilstange zwei unterschiedliche Durchmesserabschnitte aufweisen, wobei der vom Antriebsgehäuse abgewandte, erste Durchmesserabschnitt einen kleineren Durchmesser aufweist, als der dem Antriebsgehäuse zugewandte, zweite Durchmesserabschnitt, wobei das freie Ende des ersten Durchmesserabschnittes fest mit dem Ventilverschlusskörper verbunden ist und der erste Durchmesserabschnitt axial beweglich im Abdichtorgan gelagert ist. Mit einem geeigneten, beispielsweise elektrischen Aktuator kann somit das Abdichtorgan lediglich einen kleinen, definierten Spalt geöffnet werden.

In besonders vorteilhafter Weise ist zwischen dem Ventilverschlusskörper und dem Abdichtorgan mindestens ein Federorgan vorgesehen, wobei das Abdichtorgan eine Rückschlagplatte aufweisen kann, die im auf der Ventilsitzfläche aufliegenden Zustand des Ventilverschlusskörpers radial vom Ventilverschlusskörper umgeben ist und durch das Federorgan in Richtung der Ventilsitzfläche belastet ist. Hierdurch wird ein einfaches, absperrbares Rückschlagventil bereitgestellt, über welches einerseits ein Rückströmen in Richtung des Gebläses verhindert wird und andererseits eine Strömung zum Abgaskanal ermöglicht wird, wenn das Ventilverschlusskörper sich in geöffneter Stellung befindet. Bei einer geeigneten Auslegung des Federorgans und in Kombination mit einem Betätigungsmittel für das Abdichtorgan können sogar verschiedene Kennlinien für den Luftdurchsatz in Abhängigkeit vor Differenzdruck erzielt werden.

Ein Ausführungsbeispiel einer erfindungsgemäßen Luftventilvorrichtung ist in der Zeichnung dargestellt und wird anhand der folgenden Figuren beschrieben. Hierbei zeigt:
Figur 1 eine schematische Darstellung einer erfindungsgemäßen Luftventilvorrichtung, und
Figur 2 ein Kennlinien-Diagramm.

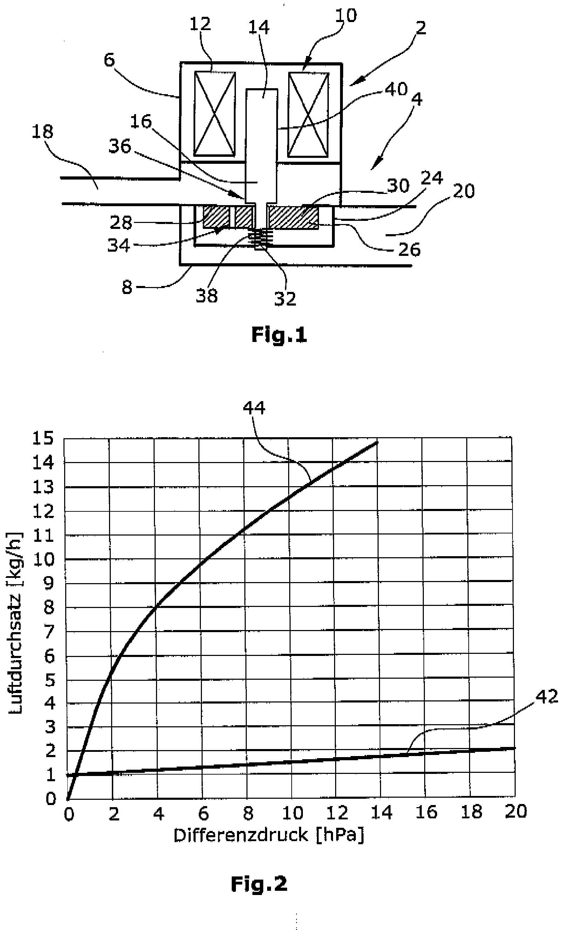

Figur 1 zeigt eine schematische Darstellung einer erfindungsgemäßen Luftventilvorrichtung 2, die sowohl als sogenanntes Sekundärluftventil als auch als OPF-Ventil eingesetzt werden kann, Die Luftventilvorrichtung 2 weist im vorliegenden Ausführungsbeispiel ein mehrteiliges Gehäuse 4 auf. Dieses Gehäuse 4 unterteilt sich hier in ein Antriebsgehäuse 6 und ein sogenanntes Strömungsgehäuse 8. Im Antriebsgehäuse 6 ist eine Antriebseinheit 10 vorgesehen, die im vorliegenden Ausführungsbeispiel als elektromagnetischer Aktuator ausgebildet ist und lediglich angedeutet skizziert ist. Es kann aber auch ein pneumatischer oder auch elektrischer Aktuator vorgesehen sein. Der elektromagnetische Aktuator 10 weist neben einem elektromagnetischen Kreis 12, von dem hier lediglich eine Spule dargestellt ist, einen Anker 14 auf, der hier einstückig mit einer Ventilstange 16 verbunden ist.

Das Strömungsgehäuse 8 weist zunächst einen Fluideinlass 18 und einen Fluidauslass 20 auf bekannte Weise auf. Der Fluideinlass 18 ist mit einem nicht dargestellten Luftgebläse verbunden. Der Fluidauslass kann mit einer Leitung verbunden sein, die vor einem nicht weiter dargestellten Otto-Partikelfilter oder vor einem nicht dargestellten Katalysator in einen Abgasstrang mündet. Im Strömungsgehäuse 8 ist des Weiteren eine Ventilverschlusseinheit 22 vorgesehen, die den Fluideinlass 18 fluidisch vom Fluidauslass 20 im geschlossenen Zustand trennt bzw. im geöffneten Zustand verbindet. Hierzu besitzt die Ventilverschlusseinheit 22 einen Ventilverschlusskörper 24 und ein Abdichtorgan 26, die auf bekannte Weise mit einer Ventilsitzfläche 28 zusammenwirken.

Im vorliegenden Ausführungsbeispiel weist das Abdichtorgan 26 eine Rückschlagplatte 30 auf, die im auf der Ventilsitzfläche 28 aufliegenden Zustand des Ventilverschlusskörpers 24 radial vom Ventilverschlusskörper 24 umgeben ist und durch ein Federorgan 32 in Richtung der Ventilsitzfläche 28 belastet ist. Beim bekannten Stand der Technik wird der Ventilverschlusskörper 24 mittels der Ventilstange 16 in eine Offenstellung überführt und das Abdichtorgan 26 öffnet aufgrund eines Differenzdruckes zwischen dem Fluideinlass 18 und dem Fluidauslass 20 entgegen der Federkraft des Federorgans 32. Bei eventuell auftretenden Druckpulsationen im Abgasstrang (beim Einsatz als Sekundärluftventil), schließt das Abdichtorgan 26 aufgrund der Rückschlagplatte 30 selbst. Es sollte deutlich sein, dass eine derartige Luftventilvorrichtung 2 bei einem hohen Differenzdruck automatisch zu einem hohen Luftdurchsatz führt; eine Kleinstmengenförderung ist hierbei überhaupt weder vorgesehen, noch möglich.

Bei der vorliegenden erfindungsgemäßen Luftventilvorrichtung 2 sind nun Öffnungsmittel 34, 36 vorgesehen, die unabhängig voneinander oder in Kombination eine definierte Öffnung des Abdichtorgans 26 unabhängig von dem Differenzdruck zwischen Fluideinlass 18 und Fluidauslass 20 ermöglichen. Das Abdichtorgan 26 weist hierbei als erstes Öffnungsmittel 34 eine Blendenöffnung auf, die im vorliegenden Ausführungsbeispiel einen Durchströmdurchmesser von 1 mm besitzt. Durch den elektromagnetischen Antrieb 10 wird der Anker 14 in Richtung des Strömungsgehäuses 8 bewegt, wodurch die fest mit dem Ventilverschlusskörper 24 verbundene Ventilstange 16 den Ventilverschlusskörper 24 von der Ventilsitzfläche 28 abhebt. Über die Blendenöffnung 34 kann nun eine geringe Menge von Luft, beispielsweise 1,5 kg pro Stunde, zum Fluidauslass gefördert werden. Durch das Federorgan 32 und die Rückschlagplatte 30 und die damit auf das Abdichtorgan 26 wirkende resultierende Kraft in Richtung der Ventilsitzfläche 28, kann definiert werden, bis zu welchem Differenzdruck das Abdichtorgan 26 auf der Ventilsitzfläche 28 aufliegt und damit die Kleinstmengenförderung durch die Blendenöffnung 34 hindurch ermöglicht. Ein zusätzliches Öffnungsmittel 36, das jedoch auch alternativ zum Öffnungsmittel 34 genutzt werden kann besteht darin, das Abdichtorgan 26 derart definiert zu öffnen, dass, wenn der Ventilverschlusskörper 24 geöffnet ist, über den geöffneten Spalt zwischen Abdichtorgan 26 und Ventilsitzfläche 28 eine Kleinstmengenförderung möglich ist. Eine derartige Ausführungsform ermöglicht auch eine hohe Federkraft des Federorgans 32, wodurch ein hoher Differenzdruck benötigt wird, um das Abdichtorgan 26 von der Ventilsitzfläche 28 abzuheben. Um in diesem Falle dennoch einen höheren Luftdurchsatz zu ermöglichen, ist hier vorgesehen, dass die Ventilstange 16 zwei unterschiedliche Durchmesserabschnitte 38, 40 aufweist, wobei der vom Antriebsgehäuse 6 abgewandte erste Durchmesserabschnitt 38 einen kleineren Durchmesser aufweist, als der dem Antriebsgehäuse 6 zugewandte, zweite Durchmesserabschnitt 40. Das freie Ende des ersten Durchmesserabschnittes 38 ist fest mit dem Ventilverschlusskörper 24 verbunden und der erste Durchmesserabschnitt ist axial beweglich im Abdichtorgan 26 gelagert. Diese bewegliche Lagerung des ersten Durchmesserabschnittes 38 im Abdichtorgan 26 ermöglicht eine Öffnung des Ventilverschlusskörpers 24, ohne dass das Abdichtorgan 26 bewegt wird. In dieser Position ist dann eine Kleinstmengenströmung mittels der Blendenöffnung 34 bis zu einem hohen Differenzdruck möglich (siehe Kennlinie 42 in Figur 2), da das Abdichtorgan durch die hohe Federkraft des Federorgans 32 gegen die Ventilsitzfläche 28 gedrückt wird. Bei einer weiteren Bewegung des Ankers 14 in Richtung des Strömungsgehäuses 8, wird dann das Abdichtorgan durch den zweiten Durchmesserabschnitt 40, der zur Anlage am Abdichtorgan 26 gelangt, dahingehend geöffnet, dass nun ein Luftdurchsatz abhängig von der Förderung des Luftgebläses realisiert werden kann (Kennlinie 44 in Figur 2).

Figur 2 zeigt in einem Diagramm die zwei zu realisierenden Kennlinien 42 und 44.

## Patentansprüche

1. Luftventilvorrichtung für eine Verbrennungskraftmaschine mit einem mehrteiligen Gehäuse (4), das zumindest ein Antriebsgehäuse (6) und ein Strömungsgehäuse (8) aufweist, wobei im Antriebsgehäuse (6) eine Antriebseinheit (10) angeordnet ist, die auf eine Ventilstange (16) einwirkt, wobei das Strömungsgehäuse (8) einen Fluideinlass (18) und einen Fluidauslass (20) aufweist, wobei im Strömungsgehäuse (8) eine Ventilverschlusseinheit (22) vorgesehen ist, die einen Ventilverschlusskörper (24) und ein Abdichtorgan (26) aufweist, die mit genau einer Ventilsitzfläche (28) derart zusammenwirken, dass der Fluideinlass (18) fluidisch von dem Fluidauslass (20) trennbar bzw. mit diesem verbindbar ist, wobei zumindest der Ventilverschlusskörper (24) durch die Ventilstange (16) betätigbar ist und das Abdichtorgan (26) unabhängig vom Ventilverschlusskörper (24) betätigbar ist,
**dadurch gekennzeichnet, dass**
Öffnungsmittel (34, 36) für die Ventilverschlusseinheit (22) vorgesehen sind, die eine definierte Öffnung des Abdichtorgans (26) unabhängig von einem Differenzdruck zwischen Fluideinlass (18) und Fluidauslass (20) ermöglichen, wobei das Abdichtorgan (26) als Öffnungsmittel (34) eine Blendenöffnung aufweist, die eine Förderung einer geringen Menge Luft vom Fluideinlass (18) zum Fluidauslass (20) ermöglicht.

2. Luftventilvorrichtung für eine Verbrennungskraftmaschine nach Anspruch 1,
**dadurch gekennzeichnet, dass**
die Blendenöffnung (34) einen Durchströmdurchmesser von 0,5mm bis 3mm aufweist.

3. Luftventilvorrichtung für eine Verbrennungskraftmaschine nach einem der vorhergehenden Ansprüche,
**dadurch gekennzeichnet, dass**
als Öffnungsmittel (36) Betätigungsmittel zur Betätigung des Abdichtorgans (26) vorgesehen sind, derart, dass das Abdichtorgan (26) definiert zu öffnen ist, wenn der Ventilverschlusskörper (24) geöffnet ist.

4. Luftventilvorrichtung für eine Verbrennungskraftmaschine nach Anspruch 3,
**dadurch gekennzeichnet, dass**
die Ventilstange (16) zwei unterschiedliche Durchmesserabschnitte (38, 40) aufweist, wobei der vom Antriebsgehäuse (6) abgewandte, erste Durchmesserabschnitt (38) einen kleineren Durchmesser aufweist, als der dem Antriebsgehäuse (6) zugewandte, zweite Durchmesserabschnitt (40), wobei das freie Ende des ersten Durchmesserabschnittes (38) fest mit dem Ventilverschlusskörper (24) verbunden ist und der erste Durchmesserabschnitt (38) axial beweglich im Abdichtorgan (26) gelagert ist.

5. Luftventilvorrichtung für eine Verbrennungskraftmaschine nach einem der vorhergehenden Ansprüche,
**dadurch gekennzeichnet, dass**
zwischen dem Ventilverschlusskörper (24) und dem Abdichtorgan (26) mindestens ein Federorgan (32) vorgesehen ist.

6. Luftventilvorrichtung für eine Verbrennungskraftmaschine nach Anspruch 5,
**dadurch gekennzeichnet, dass**
das Abdichtorgan (26) eine Rückschlagplatte (30) aufweist, die im auf der Ventilsitzfläche (28) aufliegenden Zustand des Ventilverschlusskörpers (24) radial vom Ventilverschlusskörper (24) umgeben ist und durch das Federorgan (32) in Richtung der Ventilsitzfläche (28) belastet ist.

## Claims

1. Air valve device for an internal combustion engine having a multi-part housing (4) comprising at least one drive housing (6) and a flow housing (8), wherein a drive unit (10) acting on a valve rod (16) is arranged in the drive housing (6), wherein the flow housing (8) comprises a fluid inlet (18) and a fluid outlet (20), wherein a valve closure unit (22) is provided in the flow housing (8), which comprises a valve closure body (24) and a sealing element (26), which cooperate with exactly one valve seat surface (28) such that the fluid inlet (18) can be fluidically separated from or connected to the fluid outlet (20), wherein at least the valve closure body (24) is actuatable by the valve rod (16) and the sealing element (26) can be actuated independently of the valve closure body (24),
**characterized in that**
opening means (34, 36) are provided for the valve closure unit (22), which allow a defined opening of the sealing element (26) independently of a differential pressure between the fluid inlet (18) and the fluid outlet (20), wherein the sealing element (26) has an aperture as opening means (34) that allows to convey a small amount of air from the fluid inlet (18) to the fluid outlet (19).

2. Air valve device for an internal combustion engine according to claim 1, **characterized in that** the aperture (34) has a flow diameter of 0.5 mm to 3 mm.

3. Air valve device for an internal combustion engine according to one of the preceding claims, **characterized in that** as opening means (36), actuating means for actuating the sealing element (26) are provided such that the sealing element (26) is adapted to be opened in a defined manner when the valve closure body (24) is open.

4. Air valve device for an internal combustion engine according to claim 3, **characterized in that** the valve rod (16) has two different diameter sections (38, 40), wherein the first diameter section (38) is averted from the drive housing (6) having a smaller diameter than the second diameter section (40) facing the drive housing (6), wherein the free end of the first diameter section (38) is fixedly connected to the valve closure body (24) and the first diameter section (38) is axially movably mounted in the sealing element (26).

5. Air valve device for an internal combustion engine according to one of the preceding claims, **characterized in that** at least one spring element (32) is provided between the valve closure body (24) and the sealing element (26).

6. Air valve device for an internal combustion engine according to claim 5, **characterized in that** the sealing element (26) comprises a non-return plate (30) which, when the valve closing body (24) rests on the valve seat surface (28), is surrounded radially by the valve closing body (24) and is loaded by the spring element (32) in the direction of the valve seat surface (28).

## Revendications

1. Dispositif de soupape d'air pour moteur à combustion interne comportant un carter (4) en plusieurs parties qui comprend au moins un carter d'entrainement (6) et un carter d'écoulement (8), une unité d'entrainement (10) agissant sur une tige de soupape (16) étant disposée dans le carter d'entrainement (6), ledit carter d'écoulement (8) comportant une entrée de fluide (18) et une sortie de fluide (20), une unité de fermeture de soupape (22) étant prévue dans le carter d'écoulement (8), comprenant un corps de fermeture de soupape (24) et un élément d'étanchéité (26), qui coopèrent avec exactement une surface de siège de soupape (28) de sorte que l'entrée de fluide (18) peut être séparé de ou relié à la sortie de fluide (20), au moins le corps de fermeture de soupape (24) pouvant être actionné par la tige de soupape (16) et l'élément d'étanchéité (26) pouvant être actionné indépendamment du corps de fermeture de soupape (24)
**caractérisé en ce que**
des moyens d'ouverture (34, 36) sont prévus pour l'unité de fermeture de soupape (22), qui permettent une ouverture définie de l'élément d'étanchéité (26) indépendamment d'une pression différentielle entre l'entrée de fluide (18) et la sortie de fluide (20), l'élément d'étanchéité (26) comprenant une ouverture comme moyen d'ouverture (34), qui permet le transport d'une faible quantité d'air de l'entrée de fluide (18) vers la sortie de fluide (20).

2. Dispositif de soupape d'air pour moteur à combustion interne selon la revendication 1, **caractérisé en ce que** l'ouverture (34) a un diamètre d'écoulement de 0,5 mm à 3 mm.

3. Dispositif de soupape d'air pour moteur à combustion interne selon l'une quelconque des revendications précédentes, **caractérisé en ce que** des moyens d'actionnement pour actionner l'élément d'étanchéité (26) sont prévus comme moyens d'ouverture (36) de sorte que l'élément d'étanchéité (26) peut être ouvert d'une manière définie lorsque le corps de fermeture de soupape (24) est ouvert.

4. Dispositif de soupape d'air pour moteur à combustion interne selon la revendication 3, **caractérisé en ce que** la tige de soupape (16) comprend deux sections de diamètre (38, 40) différentes, la première section de diamètre (38) détournée du carter d'entrainement (6) ayant un diamètre plus petit que la deuxième section de diamètre (40) tournée vers le carter d'entrainement (6), l'extrémité libre de la première section de diamètre (38) étant fermement relié au corps de fermeture de soupape (24) et la section de premier diamètre (38) étant monté axialement de façon mobile dans l'élément d'étanchéité (26).

5. Dispositif de soupape d'air pour moteur à combustion interne selon l'une quelconque des revendications précédentes, **caractérisé en ce qu'**au moins un élément de ressort (32) est prévu entre le corps de fermeture de soupape (24) et l'élément d'étanchéité (26).

6. Dispositif de soupape d'air pour moteur à combustion interne selon la revendication 5, **caractérisé en ce que** l'élément d'étanchéité (26) comprend une plaque anti-retour (30) qui, lorsque le corps de fermeture de soupape (24) est en état reposant sur la surface de siège de soupape (28), est entourée radialement par le corps de fermeture de soupape (24) et est sollicitée par l'élément de ressort (32) dans la direction de la surface de siège de soupape (28).
